# EUROPÄISCHE PATENTSCHRIFT

(11) **EP 1 063 793 B1**
(45) Veröffentlichungstag und Bekanntmachung des Hinweises auf die Patenterteilung: **17.12.2008**
(21) Anmeldenummer: 00111520.3
(22) Anmeldetag: 29.05.2000
(51) Int. Cl.: H04B 10/08

(54) **Verfahren zum Messen der Signalqualität eines optischen Datensignals**
Optical data signal quality measurement method
Méthode de mesure de la qualité d'un signal de données optique

(30) Priorität: 24.06.1999 DE 19928940
(43) Veröffentlichungstag der Anmeldung: 27.12.2000
(73) Patentinhaber: Nokia Siemens Networks GmbH & Co. KG, 81541 München (DE)
(72) Erfinder: Glingener, Christoph, Dr., 83620 Feldkirchen-Westerham (DE); Geiger, Harald, Dr., 82061 Neuried (DE); Gottwald, Erich, Dr., 83607 Holzkirchen (DE)

(56) Entgegenhaltungen:
- EP-A- 0 714 182
- WO-A-98/54862
- DE-C- 19 730 294

## Beschreibung

Die Erfindung betrifft ein Verfahren zum Messen der Signalqualität eines optischen Datensignals, das datenfreie Zeitabschnitte aufweist.

In bestehenden und zukünftigen optischen Übertragungssystemen, insbesondere in nach dem WDM-Prinzip (Wavelength Division Multiplexing) arbeitenden Übertragungssystemen, werden Daten in Form von Datenpaketen mit Hilfe eines optischen Datensignals übertragen, wobei die Datenpakete aus unterschiedlichen Signalarten bestehen können und speziell beim Einsatz der WDM-Technik den einzelnen Datenpaketen mehrere Übertragungkanäle zugeordnet werden. Derartige Signalarten können sich sowohl hinsichtlich des verwendeten Protokolls und/oder der benutzten Datenübertragungsraten unterscheiden. Als Beispiele hierfür sind unter anderem ATM (Asynchronous Transfer Mode), IP (Internet Protokoll) und Gigabit Ethernet zu nennen.

Um das Übertragungsverhalten des optischen Übertragungssysterns bzw. einer optischen Übertragungsstrecke überwachen zu können, wird die Signalqualität des aktuell übertragenen optischen Datensignals bestimmt. Zur Beurteilung der Signalqualität des optischen Datensignals werden optische Signalkenngrößen wie z.B. der optische Signal-Rausch-Abstand oder die durch optische Übertragungsfasern bzw. optische Übertragungseinrichtungen hervorgerufenen Signalverzerrungen des optischen Datensignals herangezogen.

In bislang realisierten optischen Übertragungssystemen werden optische Übertragungsstrecken elektronisch abgeschlossen, welches eine opto-elektronische Wandlung des Datensignals beispielsweise in den Übertragungseinrichtungen voraussetzt.

Die Bestimmung der Signalqualität des optischen Datensignals kann somit in der Übertragungseinrichtung anhand einer Messung an dem opto-elektrisch gewandelten Datensignal durchgeführt werden. Mit zunehmenden Einsatz von rein optischen Übertragungssystemen bzw. Übertragungseinrichtungen besteht ein erheblicher Bedarf an Verfahren zum Messen der Signalqualität von optischen Datensignalen bei aktuell bestehender optischer Datenübertragung, d.h. ohne das eine vorhergehende opto-elektrische Wandlung des zu überwachenden Datensignals durchgeführt werden muß.

In der Patentveröffentlichung WO98/54862 A (CIENA CORP)mit dem Titel "Signal-to-Noise Monitoring in WDM Optical Communication Systems" ist ein optisches Überwachungssystem (Monitoring System) für optische WDM Kommunikationssysteme beschrieben. Dort wird der Signal-Rausch-Abstand dadurch bestimmt, dass die Signalstärke eines optischen Datensignals aus einem der optischen Kanäle gemessen wird und mit der Rauschsignalstärke aus einem optischen Kanal, der nicht mit einem Datensignal belegt ist, verglichen wird.

Desweiteren ist aus der Hewlett Packard Product Note 71452-2 "Optical Spectrum Analyzer" ein Meßverfahren zur Bestimmung des Signal-Rausch-Abstandes eines optischen Übertragungskanals bekannt, bei dem mit Hilfe eines Meßinstruments ein optisches Meßsignal über die zu beurteilende, optische Übertragungsstrecke übertragen wird, wobei das optische Meßsignal in unregelmäßigen Abständen unterbrochen wird. Beim Anliegen des optischen Meßsignals wird mit Hilfe eines am Meßpunkt angeordneten zusätzlichen Meßinstruments die Signalstarke des optischen Meßsignals bestimmt. Des weiteren wird nach dem Eintreten einer Unterbrechung des optischen Meßsignals, d.h. in dem signalfreien Zeitabschnitt, die Signalsstärke des Rauschsignals auf der optischen Übertragungsstrecke ermittelt. Anhand der gemessenen Signalsstärken kann anschließend der Signal-Rausch-Abstand der optischen Übertragungsstrecke bestimmt werden. Obwohl die Anwendung eines derartigen Verfahrens akzeptable Meßergebnisse liefert, ist es für die Messung des Signal-Rausch-Abstandes bei "live traffic", d.h. während der aktuellen Datenübertragung, nicht anwendbar, da ein zusätzliches optisches Hilfssignal bzw. Meßsignal erzeugt und über die optische Übertragungsstrecke bzw. das optische Übertragungssystem mitübertragen werden muß.

Die der Erfindung zugrundeliegende Aufgabe besteht darin, das Messen der Signalqualität eines optischen Datensignals zu verbessern. Die Aufgabe wird ausgehend von einem Verfahren gemäß den Merkmalen des Oberbegriffs des Patentanspruches 1 durch das Merkmal des kennzeichnenden Teils gelöst.

Der wesentliche Aspekt des erfindungsgemäßen Verfahrens ist darin zu sehen, daß die Signalstärke des übertragenen, optischen Datensignals gemessen wird. Desweiteren wird in den datenfreien Zeitabschnitten die Signalstärke des Rauschsignals gemessen und anhand der gemessenen Signalstärken der Signal-Rausch-Abstand als ein Kriterium für die Signalqualität des optischen Datensignals bestimmt. Durch das erfindungsgemäße Messen der Signalstärke des optischen Datensignals wird das aktuell übertragene Datensignal hinsichtlich seiner Signalstärke überwacht. Somit wird das optische Datensignal an sich als Meßsignal zur Bestimmung des Signal-Rausch-Abstandes des Übertragungskanals benutzt. Desweiteren wird auf vorteilhafte Weise die Signalstärke des Rauschsignals in den datenfreien Zeitabschnitten gemessen. Dadurch können die ohnehin im optischen Datensignal bzw. im Meßsignal auftretenden Unterbrechungen der Datenübertragung bzw. die datenfreien Zeitabschnitte des optischen Datensignals zur Bestimmung der Signalstärke des Rauschsignals benutzt werden. Somit kann an beliebigen Stellen einer optischen Übertragungsstrecke der Signal-Rausch-Abstand eines anhand eines aus dem optischen Datensignal ausgekoppelten, optischen Teilsignals bestimmt werden, ohne das ein Meßsignal zusätzlich zum Datensignal vorzusehen ist. Hierdurch wird die Beurteilung der Signalqualität eines optischen Datensignals durch das Signal-Rausch-Abstands-Kriterum bei aktuell bestehender Datenübertragung ermöglicht.

Gemäß einer weiteren Ausgestaltung des erfindungsgemäßen Verfahrens werden gezielt zusätzliche datenfreie Zeitabschnitte in das optische Datensignal zur Messung der Signalqualität eingefügt - Anspruch 2, wobei die gezielt zusätzlich eingefügten datenfreien Zeitabschnitte dieselbe Länge aufweisen und in das optische Datensignal in einem vorgegeben zeitlichen Abstand eingefügt werden können - Anspruch 3. Sollte das optische Datensignal zu wenige, für die Bestimmung des Signal-Rausch-Abstandes notwendige, datenfreie Zeitabschnitte aufweisen, werden erfindungsgemäß zusätzliche datenfreie Zeitabschnitte in das optische Datensignal eingefügt, um die geforderte Meßgenauigkeit und -häufigkeit für die Bestimmung des Signal-Rausch-Abstandes zu gewährleisten bzw. um explizit die Signalqualität einer optischen "Punkt-zu-Punkt"-Übertragungsstrecke überwachen zu können.

Ein weiterer wesentlicher Vorteil des erfindungsgemäßen Verfahrens ist darin zu sehen, daß aus dem Verhältnis der Längen der datenfreien Zeitabschnitte und der Datenübertragungszeitabschnitte ein Maß für die durch die optische Faser bzw. optische Übertragungseinrichtungen hervorgerufene Signalverzerrung des optischen Datensignals bestimmt wird. Zusätzlich zum Messen der Signalstärke des Rauschsignals und des optischen Datensignals werden auf vorteilhafte Weise die zeitlichen Längen der datenfreien Zeitabschnitte und der Datenübertragungszeitabschnitte, d.h. die Zeitabschnitte in denen Daten explizit übertragen werden, ermittelt und zueinander ins Verhältnis gesetzt. Das sich ergebende Verhältnis am Ort der erfindungsgemäßen Messung stellt im Vergleich zum Verhältnis beim ausgesandten ursprünglichen optischen Datensignal ein Bewertungskriterium für die durch die optische Faser bzw. optische Übertragungseinrichtungen hervorgerufenen optischen Signalverzerrungen dar.

Weitere vorteilhafte Ausgestaltungen des erfindungsgemäßen Verfahrens sind den weiteren Ansprüchen zu entnehmen.

Die Erfindung soll im folgenden anhand von einem Blockschaltbild und einem Diagramm näher erläutert werden.
- Figur 1: zeigt in einem Blockschaltbild beispielhaft den schematischen Aufbau eines optischen Übertragungssystems,
- Figur 2: zeigt in einem Diagramm eine bei der optischen Übertragung von Daten entstehende, optische Signalstruktur, und
- Figur 3: zeigt in einem Blockschaltbild ein optisches Meßsystem zur erfindungsgemäßen Bestimmung der Signalqualität eines optischen Datensignals.

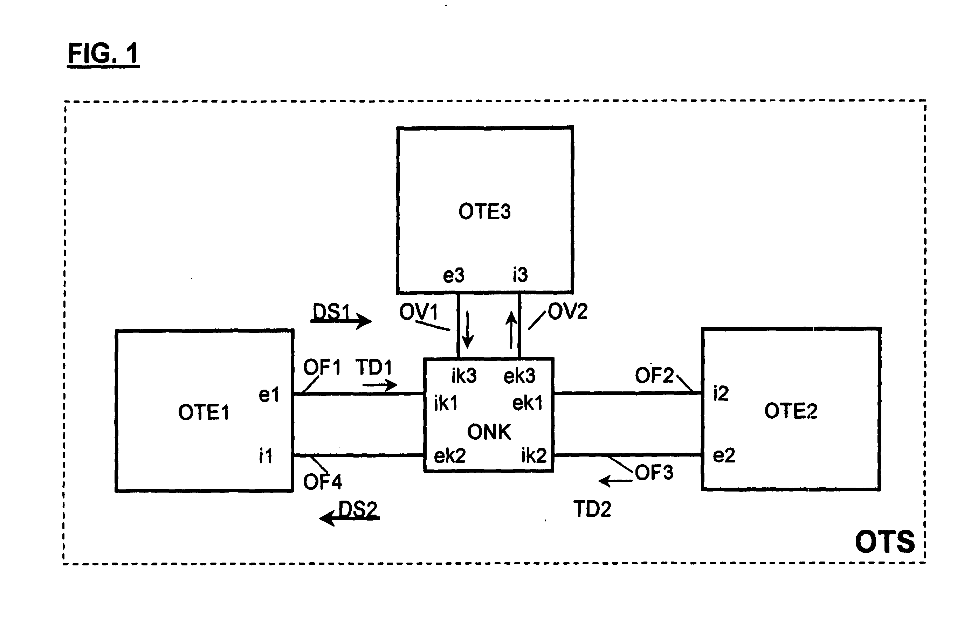

In Figur 1 ist ein beispielsweise eine erste, zweite und dritte, optische Übertragungseinrichtung OTE1-OTE3 aufweisendes, optisches Übertragungssystem OTS schematisch dargestellt, wobei beispielsweise die erste optische Übertragungseinrichtung OTE1 einen ersten Eingang i1 und einen ersten Ausgang e1, die zweite optische Übertragungseinrichtung OTE2 einen zweiten Eingang i2 und einen zweiten Ausgang e2 sowie die dritte optische Übertragungseinrichtung OTE3 einen dritten Eingang i3 und einen dritten Ausgang e3 aufweist. Des weiteren ist in der optischen Übertragungseinrichtung OTS ein optischer Netzknoten ONK vorgesehen, der beispielsweise einen ersten, zweiten und dritten Knoteneingang ik1,ik2,ik3 sowie einen ersten, zweiten und dritten Knotenausgang ek1,ek2,ek3 aufweist. Der erste Ausgang e1 der ersten optischen Übertragungseinrichtung OTE1 ist über eine erste optische Faser OF1 mit dem ersten Knoteneingang ik2 des optischen Netzknotens ONK verbunden und der erste Knotenausgang ek1 ist mit Hilfe der zweiten optischen Faser OF2 an den zweiten Eingang i2 der zweiten optischen Übertragungseinrichtung OTE2 angeschlossen. Analog dazu ist der zweite Ausgang e2 der zweiten optischen Übertragungseinrichtung OTE2 über die dritte optische Faser OF3 an den zweiten Knoteneingang ik2 des optischen Netzknotens ONK sowie der zweite Knotenausgang ek2 des optischen Netzknotens ONK über die vierte optische Faser OF4 an den ersten Eingang i1 der ersten optischen Übertragungseinrichtung OTE1 angeschlossen. Somit sind die erste und zweite optische Übertragungseinrichtung OTE1,OTE2 über den optischen Netzknoten OKN zur optischen Übertragung von Daten D verbunden, wobei bevorzugt ein erster Datenstrom DS1 in einer ersten Übertragungsrichtung TD1 zur optischen Übertragung von Daten D von der ersten zur zweiten optischen Übertragungseinrichtung OTE1,OTE2 und ein zweiter Datenstrom DS2 in einer zweiten Übertragungsrichtung TD2 zur optischen Übertragung von Daten D von der zweiten zur ersten optischen Übertragungseinrichtung OTE2,OTE1 vorgesehen ist.

Des weiteren ist die dritte optische Übertragungseinrichtung OTE3 beispielsweise zum Einspeisen von Daten D in den ersten und/oder den zweiten Datenstrom DS1,DS2 über eine erste und zweite optische Verbindungsfaser OV1,OV2 an den optischen Netzknoten ONK angeschlossen, wobei der dritte Knoteneingang ik3 bzw. der dritte Knotenausgang ek3 des optischen Netzknotens ONK mit dem dritten Ausgang e3 bzw. mit dem dritten Eingang i3 der dritten optischen Übertragungseinrichtung OTE3 verbunden sind. Somit können in der dritten optischen Übertragungsrichtung OTE3 vorhandene Daten D mit Hilfe der ersten und zweiten Verbindungsfasern OV1,OV2 und dem optischen Netzknoten ONK in erster oder zweiter Übertragungsrichtung TD1,TD2 in den ersten oder zweiten Datenstrom DS1,DS2 eingespeist oder an die dritte optische Übertragungseinrichtung OTE3 zu übermittelnde Daten D aus dem ersten oder zweiten Datenstrom DS1,DS2 ausgelesen sowie zur dritten optischen Übertragungseinrichtung OTE3 übertragen werden.

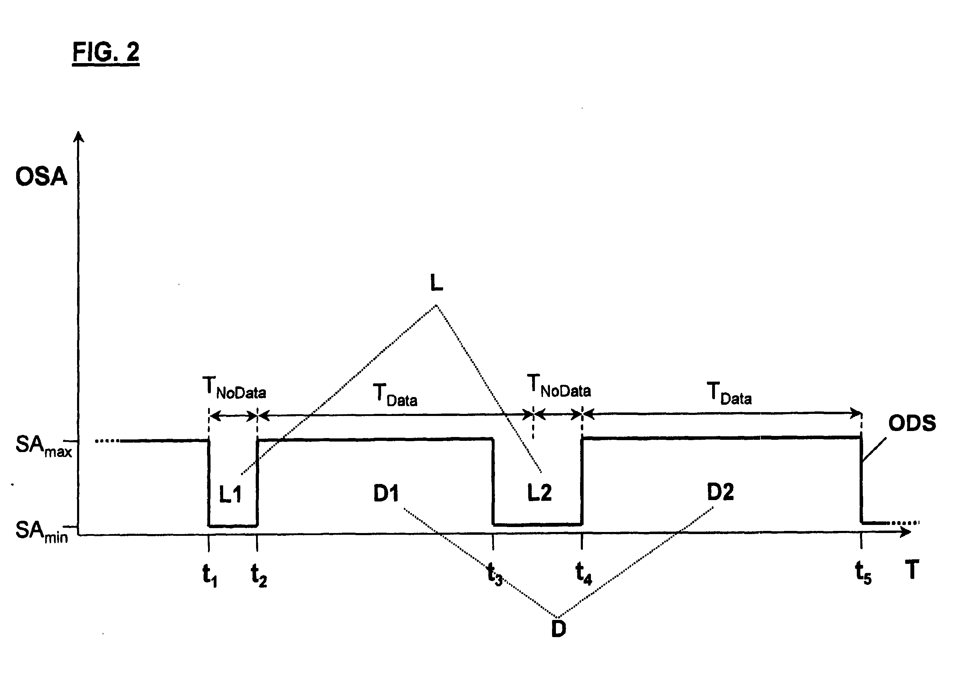

In Figur 2 ist die zur optischen Übertragung von Daten D im ersten bzw. zweiten Datenstrom DS1,DS2 vorgesehene, optische Datensignal ODS mit Hilfe eines Diagramms dargestellt. Das Diagramm weist eine horizontale und eine vertikale Achse T, OSA auf, wobei durch die horizontale Achse die Zeit T bzw. der Zeitpunkt des Anfangs und des Endes der Übertragung von Daten D und durch die vertikale Achse OSA die Amplitude OSA des optischen Datensignals ODS bzw. der zu übertragenden, optischen Daten D angezeigt wird. Das optische Datensignal ODS, beispielsweise der erste Datenstrom DS1, weist datenbehaftete Zeitabschnitte T_{Data} und datenfreie Zeitabschnitte T_{NoData} auf, wobei die datenbehafteten Zeitabschnitte T_{Data} die zu übertragenden optischen Daten D und die datenfreien Zeitabschnitte T_{NoData} die Lücken L zwischen den einzelnen optischen Daten D darstellen. In Figur 2 sind beispielhaft eine erste und eine zweite Lücke L1,L2 und erste und zweite Daten D1,D2 zur Erläuterung des erfindungsgemäßen Verfahrens dargestellt, wobei die Amplitude OSA bzw. die Signalstärke des optischen Datensignals ODS einen maximalen Signalamplitudenwert SAₘₐₓ nicht überschreitet und einen minimalen Signalamplitudenwert SA_{Min} nicht unterschreitet. Somit wird eine Lücke L des optischen Datensignals ODS durch ein einen minimalen Signalamplitudenwert SA_{Min} aufweisendes, optisches Datensignal ODS und aktuell übertragene Daten D mit Hilfe eines einen maximalen Signalamplitudenwert SAₘₐₓ aufweisenden, optischen Datensignals ODS realisiert.

Des weiteren sind in Figur 2 ein erster bis fünfter Zeitpunkt t₁-t₅ beispielhaft dargestellt, an denen jeweils die Amplitude OSA des optischen Datensignals ODS den Signalamplitudenwert SAₘᵢₙ, SAₘₐₓ wechselt. Zum ersten Zeitpunkt t₁ nimmt die Amplitude OSA des optischen Datensignals ODS den minimalen Signalamplitudenwert SAₘᵢₙ an, was zugleich den Beginn eines datenfreien Zeitabschnitts T_{NoData} bzw. der ersten Lücke L1 darstellt. Nach Verstreichen des datenfreien Zeitabschnitts T_{NoData} bzw. zum zweiten Zeitpunkt t₂ ist das zeitliche Ende der erste Lücke L1 erreicht und die ersten optischen Daten D1 werden übertragen, d.h. die Amplitude OSA des optischen Datensignals ODS nimmt den maximalen Signalamplitudenwert SA_{Max} an. Nach optischer Übertragung der ersten optischen Daten D1, welches der Dauer des datenbehafteten Zeitabschnitts T_{Data} entspricht, wird zum dritten Zeitpunkt t₃ die Amplitude OSA des optischen Datensignals ODS auf den minimalen Signalamplitudenwert SA_{Min} zurückgesetzt, d.h. eine zweite Lücke L2 in den ersten bzw. zweiten Datenstrom DS1, DS2 entsteht.

Zum vierten Zeitpunkt t₄ bzw. nach Ablauf des datenfreien Zeitabschnitts T_{NoData} werden zweite optische Daten D2 übertragen, d.h. die Amplitude OSA des optischen Datensignals ODS nimmt den maximalen Signalamplitudenwert SAₘₐₓ an. Die Amplitude OSA des optischen Datensignals ODS bleibt wiederum für die Dauer des datenbehafteten Zeitabschnitts T_{Data} unverändert und nimmt schließlich nach Ablauf des datenbehafteten Zeitabschnitts T_{Data} bzw. nach der Übertragung der zweiten optischen Daten D2 zum fünften Zeitpunkt t₅ den minimalen Signalamplitudenwert SAₘᵢₙ erneut an, d.h. eine weitere Lücke L2 schließt sich den zweiten optischen Daten D2 an.

Das zuvor beschriebene optische Datensignal ODS ist in Figur 2 beispielhaft nur ausschnittsweise dargestellt, d.h. zum Messen der Signalqualität eines optischen Datensignals mit Hilfe des erfindungsgemäßen Verfahrens werden eine Vielzahl derartiger optischer Daten D und Lücken L benötigt, die in Ihrer Gesamtheit den kontinuierlichen ersten und zweiten Datenstrom DS1,DS2 darstellen. Dabei können erfindungsgemäß auch zusätzliche Lücken L in den ersten bzw. zweiten Datenstrom eingefügt werden, wobei der zeitliche Abstand der eingefügten Lücken L jeweils immer dieselbe zeitliche Länge aufweisen kann. Jedoch sollte der datenfreie Zeitabschnitt T_{NoData} zwischen aufeinanderfolgenden Daten D1,D2 deutlich kleiner als eine Millisekunde, d.h. im Mikrosekundenbereich, sein.

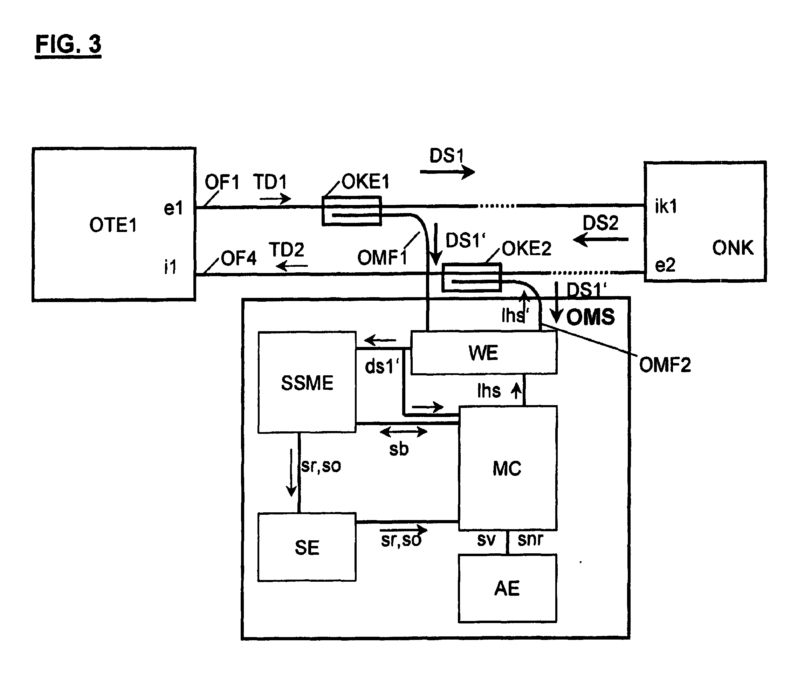

In Figur 3 ist ein Blockschaltbild eines optischen Meßsystems OMS zur Bestimmung der Signalqualität, insbesondere des Signal-Rausch-Abstandes snr, des ersten optischen Datenstromes DS1 schematisch dargestellt, wobei hierzu beispielhaft die in Figur 1 dargestellte optische Übertragungsstrecke zwischen der ersten optischen Übertragungseinrichtung OTE1 und dem optischen Netzknoten ONK hinsichtlich Ihrer Übertragungsqualität überwacht wird. Dazu wird ein erstes optisches Koppelelement OKE1 an einer beliebigen Messstelle in die erste optische Faser OF1 integriert, mit dessen Hilfe ein Teil des ersten optischen, in erster Übertragungsrichtung TD1 übermittelten Datenstroms DS1' aus dem ersten optischen Datenstrom DS1 ausgekoppelt werden kann. Das erste optische Koppelelement OKE ist über eine erste optische Meßfaser OMF1 an das optische Meßsystem OMS angeschlossen. Analog dazu wird ein zweites optisches Koppelelement OKE2 an derselben Messstelle in die zweite optische Faser OF2 integriert, mit dessen Hilfe ein Teil des zweiten optischen, in zweiter Übertragungsrichtung TD2 übermittelten Datenstroms DS2' aus dem zweiten optischen Datenstrom DS2 ausgekoppelt werden kann. Das zweite optische Koppelelement OKE ist über eine zweite optische Meßfaser OMF2 an das optische Meßsystem OMS angeschlossen.

Des weiteren weist das optische Meßsystem OMS eine Wandler-Einheit WE, eine Signalstärke-Meßeinheit SSME, eine Speichereinheit SE, eine Steuereinheit MC und eine Anzeigeeinheit AE auf. Die erste und zweite optische Meßfaser OMF1/OMF2 sind an die Wandler-Einheit WE geführt, die mit der SignalstärkeMeßeinheit SSME verbunden ist. Zur Bestimmung des Signal-Rausch-Abstandes snr ist die Steuereinheit MC mit der Signalstärke-Neßeinheit SSME, mit der Wandler-Einheit WE und mit der Speichereinheit SE verbunden, wobei zusätzlich die Anzeigeeinheit AE zur Darstellung des Signal-Rausch-Abstandes snr an die Steuereinheit MC angeschlossen ist. Desweiteren besteht eine Verbindung zwischen der Signalstärke-Meßeinheit SSME und der Speichereinheit SE.

Im folgenden wird das erfindungsgemäße Verfahren zum Messen der Signalqualität eines optischen Datensignals DS1/DS2 beispielsweise anhand des ersten optischen Datenstroms DS1 näher erläutert, wobei die Bestimmung der Signalqualität des zweiten optischen Datenstroms DS2 analog dazu durchführbar ist. Mit Hilfe der ersten optischen Koppeleinrichtung OKE1 wird ein Teil des ersten optischen Datenstroms DS1' von dem ersten optischen Datenstrom DS1 abgeteilt und über die erste optische Meßfaser OMF1 an das optische Meßsystem OMS, bzw. die Wandler-Einheit WE übertragen. In der Wandler-Einheit WE wird der abgeteilte, erste optische Datenstrom DS1' in einen ersten elektrischen Datenstrom ds1' umgesetzt und an die Signalstärkemeßeinheit SSME und an die Steuereinheit MC übermittelt. In der Steuereinheit MC wird der erste elektrische Datenstrom ds1' hinsichtlich auftretender, datenfreier Zeitabschnitte T_{NoData} bzw. auftretender Lücken L überwacht. Beim Auftreten einer Lücke L wird unmittelbar mit Hilfe von an die Signalstärkemeßeinheit SSME übertragenen Steuerkommandos sb eine Messung der Signalstärke des Rauschsignals bzw. des Rauschens der Übertragungsstrecke eingeleitet, d.h. in der Signalstärkemeßeinheit SSME wird die Rauschsignalstärke sr bestimmt. Die gemessene Rauschsignalstärke sr wird anschließend in der Speichereinheit SE zwischengespeichert. Analog dazu wird durch die Signalstärkemeßeinheit SSME bei aktuell bestehender Übertragung von Daten D, d.h. in den datenbehafteten Zeitabschnitten T_{Data}, wird zyklisch die Signalstärke des ersten elektrischen Datensignals ds1' bestimmt und jeweils der aktuell gemessene Wert der Datensignalstärke sd in der Speichereinheit SE zwischengespeichert.

Zur Bestimmung des Signal-Rausch-Abstandes snr werden die in der Speichereinheit SE zwischengespeicherte Rauschsignalstärke sr und die Datensignalstärke sd von der Steuereinheit MC aus der Speichereinheit SE ausgelesen. Mit Hilfe der ausgelesenen Rauschsignalstärke sr und der Datensignalstärke sd wird in der Steuereinheit MC der Signal-Rausch-Abstand snr des aktuell übertragenen ersten optischen Datenstroms DS1 bestimmt und anhand der Anzeigeeinheit AE angezeigt, wobei das Anzeigen des Signal-Rausch-Abstandes snr sowohl akustisch als auch visuell durchgeführt werden kann.

Zusätzlich wird in der Steuereinheit MC die Länge der datenfreien Zeitabschnitte T_{NoData} und die Länge der datenbehafteten Zeitabschnitte T_{Data} bestimmt und ins Verhältnis gesetzt. Der sich aus dem Verhältnis von datenfreien zu datenbehafteten Zeitabschnitten T_{NoData}, T_{Data} ergebende Wert ist ein Maß beispielsweise für die durch die erste optische Faser OF1 oder die erste optische Übertragungseinrichtung OTE1 hervorgerufenen Signalverzerrungen sv im optischen Datensignal ODS und kann für die Beurteilung der Übertragungsqualität der optischen Übertragungsstrecke zur Verfügung gestellt werden. Der in der Steuereinheit MC ermittelte Wert für die Signalverzerrung sv im optischen Datensignal ODS wird mit Hilfe der Anzeigeeinheit AE angezeigt.

Des weiteren wird durch die Steuereinheit MC die Häufigkeit des Auftretens von Lücken L innerhalb des ersten elektrischen Datenstromes ds1' bestimmt und der optischen Übertragungseinrichtung OTE1 angezeigt. Hierzu wird ein Wert für die Häufigkeit des Auftretens von Lücken L in der Steuereinheit MC ermittelt und ein diesen Wert repräsentierendes elektrisches Lückenhäufigkeitssignal lhs an die Wandler-Einheit WE übertragen. In der Wandler-Einheit WE wird das elektrische Lückenhäufigkeitssignal lhs in ein optisches Lückenhäufigkeitssignal lhs' gewandelt und über die zweite optische Meßfaser OMF2 an die zweite optische Kopplereinheit OKE2 übertragen. Mit Hilfe der zweiten optischen Kopplereinheit OKE2 wird das optische Lückenhäufigkeitssignal lhs' in den zweiten optischen Datenstrom DS2 eingekoppelt und zur ersten optischen Übertragungseinrichtung OTE1 übertragen. Bei einer einen zu geringen Pegel aufweisenden, optischen Lückenhäufigkeitssignal lhs', welches beispielsweise einem zu geringen Lückenhäufigkeitswert entspricht, können durch die erste optische Übertragungseinrichtung OTE1 zusätzliche datenfreie Zeitabschnitte T_{NoData} zur genaueren Messung der Signalqualität in den ersten optischen Datenstrom DS1 eingefügt werden, wobei die zusätzlich eingefügten datenfreien Zeitabschnitte T_{NoData} beispielsweise dieselbe Länge aufweisen und in einem vorgegeben zeitlichen Abstand eingefügt werden können.

Um die Meßgenauigkeit zu erhöhen, werden die beschriebenen Messungen der Signalstärken mehrfach wiederholt und aus den berechneten Signal-Rausch-Abstands-Werten wird der Mittelwert gebildet. Dadurch müssen um eine Mindestmeßgenauigkeit sicherzustellen bei einer zu geringen Lückenhäufigkeit innerhalb des zu übertragenden, ersten optischen Datenstroms DS1 zusätzliche Lücken L in den ersten optischen Datenstrom DS1 eingefügt werden.

Zusätzlich können mit Hilfe des optischen Meßsystems OMS in die datenfreien Zeitabschnitte T_{NoData} des optischen Datensignals ODS kurze Testsignale bzw. Testsignalmuster eingefügt werden, mit deren Hilfe beispielsweise die Reaktion des opti-schen Übertragungssystems OTS bzw. der optischen Übertragungsstrecke hinsichtlich nichtlinearer Effekte gezielt untersucht werden kann.

Die Anwendung des erfindungsgemäßen Verfahrens ist keinesfalls auf WDM-Übertragungssysteme beschränkt, sondern kann durchaus für die Realisierung von beliebigen optischen Übertragungsstrecken eingesetzt werden.

## Patentansprüche

1. Verfahren zum Messen der Signalqualität eines optischen Datensignals (ODS), das datenfreie Zeitabschnitte (T_{NoData}) aufweist,
**dadurch gekennzeichnet,**
- **daß** die Signalstärke des übertragenen, optischen Datensignals (sd) gemessen wird,
- **daß** in den datenfreien Zeitabschnitten (T_{NoData}) die Signalstärke des Rauschsignals (sr) gemessen wird und
- **daß** anhand der gemessenen Signalstärken (sd,sr) der Signal-Rausch-Abstand (snr) als ein Kriterium für die Signalqualität des optischen Datensignals (ODS) bestimmt wird.

2. Verfahren nach Anspruch 1,
**dadurch gekennzeichnet,**
**daß** gezielt zusätzliche datenfreie Zeitabschnitte (T_{NoData}) in das optische Datensignal (ODS) zur Messung der Signalqualität eingefügt werden.

3. Verfahren nach Anspruch 1 oder 2,
**dadurch gekennzeichnet,**
**daß** die gezielt zusätzlich eingefügten, datenfreien Zeitabschnitte (T_{NoData}) dieselbe Länge aufweisen und in das optische Datensignal (ODS) in einem vorgegeben zeitlichen Abstand eingefügt werden.

4. Verfahren nach einem der Ansprüche 1 bis 3,
**dadurch gekennzeichnet ,**
**daß** aus dem Verhältnis der Längen der datenfreien Zeitabschnitte (T_{NoData}) und der Datenübertragungszeitabschnitte (T_{Data}) ein Maß für die durch die optische Faser (OF1-OF4) bzw. optische Ubertragungseinrichtungen (OTE1,OTE2, ONK) hervorgerufene Signalverzerrung des optischen Datensignals (ODS) bestimmt wird.

5. Verfahren nach einem der Ansprüche 1 bis 4,
**dadurch gekennzeichnet,**
**daß** in die datenfreien Zeitabschnitte (T_{NoData}) des optischen Datensignals (ODS) teilweise optische Testsignale eingefügt werden.

6. Verfahren nach einem der Ansprüche 1 bis 5,
**dadurch gekennzeichnet,**
**daß** das Messen der Signalqualität des optischen Datensignals (ODS) bei aktuell bestehender, optischer Datenübertragung durchgeführt wird.

## Claims

1. Method for measuring the signal quality of an optical data signal (ODS) which has data-free time intervals (T_{NoData}), **characterized**
- **in that** the signal strength of the transmitted optical data signal (sd) is measured,
- **in that** the signal strength of the noise signal (sr) is measured in the data-free time intervals (T_{NoData}), and
- **in that** the signal-to-noise ratio (snr) is determined by reference to the measured signal strengths (sd, sr) as a criterion for the signal quality of the optical data signal (ODS).

2. Method according to Claim 1, **characterized in that** additional data-free time intervals (T_{NoData}) are selectively inserted into the optical data signal (ODS) in order to measure the signal quality.

3. Method according to Claim 1 or 2, **characterized in that** the data-free time intervals (T_{NoData}) which are additionally selectively inserted are of the same length and are inserted into the optical data signal (ODS) at a predefined time interval.

4. Method according to one of Claims 1 to 3, **characterized in that** a measure of the signal distortion of the optical data signal (ODS) which is caused by the optical fiber (OF1-OF4) and/or optical transmitter devices (OTE1, OTE2, ONK) is determined from the ratio of the lengths of the data-free time intervals (T_{NoData}) to the data-transmission time intervals (T_{Data}).

5. Method according to one of Claims 1 to 4, **characterized in that** in some cases optical test signals are inserted into the data-free time intervals (T_{NoData}) of the optical data signal (ODS) .

6. Method according to one of Claims 1 to 5, **characterized in that** the signal quality of the optical data signal (ODS) is measured while an optical data transmission is currently taking place.

## Revendications

1. Procédé pour mesurer la qualité de signal d'un signal de données optique (ODS) qui comporte des tranches de temps sans données (T_{NoData}), **caractérisé en ce que**
- l'intensité de signal du signal de données optique transmis (sd) est mesurée,
- l'intensité de signal du signal de bruit (sr) est mesurée dans les tranches de temps sans données (T_{NoData}) et
- le rapport signal sur bruit (snr) est déterminé à l'aide des intensités de signal mesurées (sd, sr) en tant que critère de la qualité de signal du signal de données optique (ODS).

2. Procédé selon la revendication 1, **caractérisé en ce que** des tranches de temps sans données (T_{NoData}) supplémentaires sont insérées de manière ciblée dans le signal de données optique (ODS) pour mesurer la qualité de signal.

3. Procédé selon la revendication 1 ou 2, **caractérisé en ce que** les tranches de temps sans données (T_{NoData}) insérées additionnellement de manière ciblée présentent la même longueur et sont insérées dans le signal de données optique (ODS) avec un intervalle de temps prédéterminé.

4. Procédé selon l'une des revendications 1 à 3, **caractérisé en ce qu'**est déterminée, à partir du rapport entre les longueurs des tranches de temps sans données (T_{NoData}) et des tranches de temps de transmission de données (T_{Data}), une mesure de la distorsion de signal du signal de données optique (ODS) provoquée par la fibre optique (OF1-OF4) resp. par des dispositifs de transmission optique (OTE1, OTE2, ONK).

5. Procédé selon l'une des revendications 1 à 4, **caractérisé en ce que** sont insérés dans les tranches de temps sans données (T_{NoData}) du signal de données optique (ODS), en partie, des signaux de test optiques.

6. Procédé selon l'une des revendications 1 à 5, **caractérisé en ce que** la mesure de la qualité de signal du signal de données optique (ODS) est effectuée en cours de transmission optique de données.
